**Europäisches Patentamt**

**European Patent Office**

**Office européen des brevets**

(11) Veröffentlichungsnummer: **0 211 247**
**A2**

# EUROPÄISCHE PATENTANMELDUNG

(21) Anmeldenummer: 86109154.4

(22) Anmeldetag: 04.07.86

(51) Int. Cl.⁴: **B 24 D 3/18**

(30) Priorität: 31.07.85 DE 3527312

(43) Veröffentlichungstag der Anmeldung:
25.02.87 Patentblatt 87/9

(84) Benannte Vertragsstaaten:
AT BE CH FR GB LI NL SE

(71) Anmelder: Techno-Keramik GmbH
Ruhrstrasse 48
D-5830 Schwelm(DE)

(72) Erfinder: Gliemeroth, Georg, Dr.-Ing. Dipl.-Ing.
Viktoriastrasse 81
D-5600 Wuppertal 1(DE)

(74) Vertreter: Andrejewski, Walter et al,
Patentanwälte Andrejewski, Honke & Partner Postfach 10
02 54 Theaterplatz 3
D-4300 Essen 1(DE)

(54) Feinschleifwerkzeug für die Bearbeitung von Werkstücken aus Metall, Glas oder Keramik.

(57) Feinschleifwerkzeug für die Bearbeitung von Werkstücken aus Metall, Glas oder Keramik, - bestehend aus einer feinkörnigen Schleifmittelkomponente. Die Schleifmittelkomponente und die Bindemittelkomponente sind innig gemischt. Die Bindemittelkomponente besteht hauptsächlich aus feinkörnigem Glas. Der Werkzeugkörper ist durch Pressen und Sintern hergestellt. Die Schliefmittelkomponente weist eine maximale Korngröße von kleiner als 20 μm, und sogar kleiner als 4 μm, auf und ist zu mindestens 50 Gew.% aus dem kubischen Bornitrid, im Rest aus anderen Hartstoffen zusammengesetzt.

EP 0 211 247 A2

Croydon Printing Company Ltd.

**Andrejewski, Honke & Partner, Patentanwälte in Essen**

Feinschleifwerkzeug für die Bearbeitung von
Werkstücken aus Metall, Glas oder Keramik

Die Erfindung bezieht sich gattungsgemäß auf ein Feinschleifwerkzeug für die Bearbeitung von Werkstücken aus Metall, Glas oder Keramik, – bestehend aus einer feinkörnigen Schleifmittelkomponente mit kubischem Bornitrid und einer keramischen Bindemittelkomponente, wobei die Schleifmittelkomponente und die Bindemittelkomponente innig gemischt sind und der Werkzeugkörper durch Pressen und Sintern hergestellt ist. – Es versteht sich, daß beim Arbeiten mit einem solchen Feinschleifwerkzeug eine Schleifflüssigkeit wie üblich zugeführt wird.

Bei dem (aus der Praxis) bekannten gattungsgemäßen Feinschleifwerkzeug ist die Bindemittelkomponente Keramik aus klassischen keramischen Grundstoffen, aber nicht aus Glas. Das Verhältnis Schleifmittel/Keramik liegt im Bereich 1 : 2 bis 1 : 15. Die keramische Bindung ist z. B. aus Feldspat, Kaolin, Ton und Fritte aufgebaut. Sie verlangt einen Brennvorgang bei einer Brenntemperatur von über 1000 °C, z. B. von etwa 1350 °C, in keramischen Brennöfen. Das ist einerseits aufwendig und führt zu Problemen, wenn die Schleifmittelkomponente infolge Feinkörnigkeit eine große innere Oberfläche aufweist und dadurch die Bornitridkomponente oxidationsfreudig ist. Das kubische Bornitrid oxidiert bei einem Brennvorgang bei diesen Temperaturen zumindest teilweise. Letzteres beeinträchtigt die Standzeit der Feinschleifwerkzeuge. Bei einer Körnung von kleiner als 20 µm ist dieser Effekt sehr störend. Zwar ist es bekannt, als Bindemittelkomponente glasbildende Rohstoffe ($SiO_2$, $Na_2O$, CaO, $Al_2O_3$, $K_2O$, $B_2O_3$ u. a.) einzusetzen, jedoch ist die Bindemittelkomponente hier nicht aus feinkörnigem Glas gesintert, sondern geschmolzen.

Der Erfindung liegt die Aufgabe zugrunde, ein gattungsgemäßes Feinschleifwerkzeug anzugeben, welches auf einfache Weise hergestellt werden kann, und zwar auch mit einer sehr feinkörnigen Schleifmittelkomponente, sowie sich durch eine hohe Standzeit auszeichnet.

Zur Lösung dieser Aufgabe lehrt die Erfindung, daß die Bindemittelkomponente hauptsächlich aus feinkörnigem zusammengesinterten Glas besteht und das Feinschleifwerkzeug ein Porenvolumen von zumindest 5 Vol.% aufweist. Die Schleifmittelkomponente weist nach bevorzugter Ausführungsform der Erfindung eine maximale Korngröße von kleiner als 20 μm auf und besteht zu mindestens 50 Gew.% aus dem kubischen Bornitrid, im Rest aus anderen Hartstoffen. Feinkörniges Glas meint auch Glasmischungen, die als Rohstoff für die feinkörnige Bindemittelkomponente verwendet werden. Vorzugsweise besteht die Schleifmittelkomponente ausschließlich aus dem kubischen Bornitrid. Dabei kann die Schleifmittelkomponente eine Korngröße im Bereich von kleiner 20 μm bis 4 μm aufweisen, während die Bindemittelkomponente ausschließlich aus feinkörnigem Glas besteht. Die Schleifmittelkomponente kann jedoch auch so eingestellt sein, daß die maximale Korngröße aller Körner der Schleifmittelkomponente kleiner als 4 μm ist.

Die Erfindung geht von der Erkenntnis aus, daß bei einem gattungsgemäßen Feinschleifwerkzeug die Bindemittelkomponente nicht aus Keramik im klassischen Sinne mit z. B. der eingangs angegebenen Zusammensetzung bestehen muß. Die Bindemittelkomponente kann vielmehr ganz oder hauptsächlich aus feinkörnigem Glas bestehen. Die Erfindung arbeitet insoweit von vornherein mit Glas im Gegensatz zu den keramischen Rohstoffen der konventionellen Bindemittel. Es versteht sich, daß die Körnung der Bindemittelkomponente und die der Schleifmittelkomponente aufeinander abzustimmen sind. Eine allgemeine Regel besagt dazu, daß zumindest ein Teil der Bindemittelkomponente in deutlich größeren Partikeln als die Schleifmittelkomponente vorliegen soll. Die Bindemittelkörner sind z. B. fünfmal größer als die Schleifmittelkörner, können aber auch noch größer sein.

Die Sintertemperatur liegt bei der Bindemittelkomponente, mit der erfindungsgemäß gearbeitet wird, weit unter 1000 °C, vorzugsweise erfolgt die Sinterung bei einer Temperatur von unter 830 °C, z. B. bei 820 °C. Da, wie angegeben, mit Glaskeramik gearbeitet wird, wird eine störende Oxidation des Bornitrids nicht mehr beobachtet. Dazu kann auch mit einer Schutzgasatmosphäre gearbeitet werden. Überraschenderweise werden die Körner der Schleifmittelkomponente in der hauptsächlich aus Glas gesinterten Bindemittelkomponente trotz der niedrigen Sintertemperatur sicher festgehalten. Das gilt insbes. dann, wenn die Bindemittelkomponente im Temperaturbereich zwischen 20 und 300 °C einen linearen thermischen Ausdehnungskoeffizienten aufweist, der kleiner oder gleich dem linearen thermischen Ausdehnungskoeffizienten der Zusammensetzung der Körner der Schleifmittelkomponente ist. Eine solche Auslegung führt zwar nicht zu einer Einspannung der einzelnen Körner der Schleifmittelkomponente, jedoch findet eine überraschend gute Bindung statt. Aber auch wenn die vorstehende Bedingung nicht eingehalten ist und die Bindemittelkomponente im angegebenen Temperaturbereich einen linearen thermischen Ausdehnungskoeffizienten aufweist, der größer oder gleich dem linearen thermischen Ausdehnungskoeffizienten der Zusammensetzung der Körner der Schleifmittelkomponente ist, werden diese überraschenderweise sicher festgehalten, nämlich gleichsam mechanisch eingespannt. Von besonderer Bedeutung ist dabei das Porenvolumen. Es soll nicht kleiner sein als oben angegeben. Bei dem erfindungsgemäßen Feinschleifwerkzeug bilden diese Poren Spanaufnahmeräume, die die beim Schleifvorgang abgescherten feinen Späne aufnehmen. Das beeinflußt positiv die Qualität des Schleifvorganges sowie die Standzeit. Das Porenvolumen der Bindemittelkomponente und deren linearer Ausdehnungskoeffizient lassen sich unterschiedlichen Betriebsbedingungen anpassen. Es versteht sich, daß die Betriebsbedingungen, einschließlich der Zuführung der Schleifflüssigkeit, so eingestellt werden, daß auch beim Schleifvorgang eine störende Oxidation nicht auftritt.

Im einzelnen bestehen im Rahmen der Erfindung mehrere Möglichkeiten der weiteren Ausbildung und Gestaltung. Eine bevorzugte Ausführungsform der Erfindung ist dadurch gekennzeichnet, daß das feinkörnige Glas aus zwei Glassorten gemischt ist, von denen eine einen niedrigeren, die andere einen höheren Erweichungsbereich aufweist. Unter Berücksichtigung der angegebenen Körnungen für die Schleifmittelkomponente empfiehlt es sich dabei, so einzustellen, daß das feinkörnige Glas mit dem niedrigeren Erweichungsbereich ein Kornverteilungsmaximum von unter 20 µm, das feinkörnige Glas mit dem höheren Erweichungsbereich ein Kornverteilungsmaximum über 50 µm aufweist. Grundsätzlich kann im Rahmen der Erfindung die Abstimmung der Schleifmittelkomponente auf die Bindemittelkomponente in dem eingangs zum Stand der Technik behandelten Bereich durchgeführt werden. Vorzugsweise erfolgt jedoch bei erfindungsgemäßen Schleifwerkzeugen eine Spezifizierung, und zwar dahingehend, daß der Schleifmittelanteil einerseits und der Bindemittelanteil andererseits gewichtsmäßig etwa gleich groß sind. Das führt zu Feinschleifwerkzeugen mit besonders großer Standzeit. Das Porenvolumen kann durch die Kornverteilung sowie durch die Pressung und Sinterung eingestellt werden, beispielsweise im Bereich von 5 bis 65 Vol.%, vorzugsweise im Bereich von 30 bis 50 Vol.%. Besonders bewährt haben sich Feinschleifwerkzeuge nach der Erfindung, bei denen die Bindemittelkomponente besonders aufgebaut ist. Eine Ausführungsform ist in diesem Zusammenhang dadurch gekennzeichnet, daß das feinkörnige Glas der Bindemittelkomponente eine Zusammensetzung im Bereich von

| | |
|---|---|
| Siliziumdioxid | 5 bis 75 |
| Boroxid | 1 bis 40 |
| Aluminiumoxid | 1 bis 25 |
| Natriumoxid | 1 bis 16 |
| Kaliumoxid | 1 bis 14, |

alle Zahlen in Gewichtsanteilen, aufweist. Außerdem kann im Rahmen der Erfindung das feinkörnige Glas zusätzlich einen oder mehrere der Stoffe

| | |
|---|---|
| Phosphorpentoxid | maximal 35 |
| Bariumoxid | maximal 10 |
| Kalziumoxid | maximal 16 |
| Magnesiumoxid | maximal 10 |
| Lithiumoxid | maximal 3 |
| Zinkoxid | maximal 15 |
| Bleioxid | maximal 22 |
| Zirkonoxid | maximal 8 |
| Titanoxid | maximal 4, |

enthalten alle Zahlen in Gewichtsanteilen. Wesentlich ist, daß vor der erfindungsgemäßen Herstellung der Werkzeuge aus den Komponenten zunächst ein homogenes Glas und daraus die feinkörnige Bindemittelkomponente erzeugt wird, und zwar auch, wenn diese aus Glasmischungen zusammengesetzt ist. Insbes. wenn die Bindemittelkomponente wie vorstehend beschrieben eingerichtet ist, besteht die Möglichkeit, mit einer extrem feinen Schleifmittelkomponente zu arbeiten, nämlich mit einer solchen, die eine Korngröße unter 4 µm besitzt, wobei die Bindemittelkomponente einen feinkörnigen, kristallinen Zusatz, z. B. Eukryptit, von bis zu 10 Gewichtsanteilen der Bindemittelkomponente aufweisen kann. Die Bindemittelkomponente des vorstehend beschriebenen Aufbaus, mit ggf. einem Zusatzstoff oder mehreren Zusatzstoffen, besitzt vorzugsweise eine Korngröße, die um einen Faktor von 2 bis 4 größer ist als die der Schleifmittelkomponente. Ohne weiteres läßt sich erreichen, daß durch die Kornverteilung sowie durch die Pressung oder Sinterung dabei ein Porenvolumen von etwa 12 % eingestellt wird. Bei einem Porenvolumen von kleiner oder gleich 12 Vol.% soll der lineare thermische Ausdehnungskoeffizient des Bindemittelanteils im Bereich zwischen 20 und 300 °C um zumindest $2 \times 10^{-7}$ pro Grad Celsius über dem mittleren linearen thermischen Ausdehnungskoeffizienten der Zusammensetzung der Körner des Schleifmittels liegen. Bei einem Porenvolumen größer oder gleich 12 Vol.% liegt der lineare thermische Ausdehnungskoeffizient des Bindemittelanteils zweckmäßigerweise im Bereich zwischen 20 und 300 °C um zumindest $2 \times 10^{-7}$ pro Grad Celsius unter dem mittleren linearen thermischen Ausdehnungskoeffizienten der Zusammensetzung der Körner des Schleifmittelanteils.

Im folgenden werden die Erfindung und die erreichten Vorteile anhand eines Ausführungsbeispiels erläutert.

Die beigefügte Tabelle zeigt einige Beispiele von Gläsern, die einzeln oder miteinander kombiniert als Ausgangsmaterial für das Bindemittel verwendet werden. Die Gläser werden jeweils zu einem homogenen Glasfluß optischer Qualität verschmolzen und nach Formung zu Scheiben oder beliebigen anderen Formkörpern abgekühlt auf Raumtemperatur. Anschließend werden die Gläser im Brecher getrennt zerkleinert, in Kugelmühlen handelsüblicher Bauart trocken gemahlen und dann zu Kornfraktionen trocken klassiert und gesichtet. Feuchtigkeit in irgendeinem Stadium des Verfahrens mindert die spätere Qualität des aus dem Glas erzeugten Bindemittels.

Eine Rohmasse wird anschließend wie folgt hergestellt:

Vom Glas der Zusammensetzung 8 obiger Tabelle wird die Kornfraktion 0 bis 5 µm verwendet. Von ihr werden 4,77 g in ein Mischgefäß eingewogen. Vom Glas mit der Zusammensetzung 1 wird die Kornfraktion 32 bis 50 µm benutzt, von ihr werden 6,61 g in das Mischgefäß zugewogen. Anschließend wird kubisches Bornitrid mit der Korngrößenverteilung zwischen 6 und 12 µm in einer Menge von 4,77 g zugewogen. Das Mischgefäß wird verschlossen, in einem Schaukelmischer wird 20 min trocken gemischt. Dann wird das Mischgefäß geöffnet, 1 ml Äthylalkohol und eine Gummikugel mit 1 cm Durchmesser werden zugegeben. Das Mischgefäß wird geschlossen und wieder dem Mischer für 20 min aufgegeben. Die von der Gummikugel durchgeknetete Rohmasse wird in vier Chargen zu je 4,26 g ausgewogen und jede Rohmassen-Charge in eine viereckige Preßform aus Stahl mit 18 x 23 mm Querschnitt gefüllt. Auf einer kleinen Spindelpresse werden die Chargen zu Prismen mit der Höhe von 4 mm kalt verpreßt. Der Preßdruck beträgt 65 bar. Nach Entfernen der umgebenden Matrize und der Stempel werden die Körper mit der Abmessung 18 x 23 x 4 mm in den Trockenschrank gebracht, dort auf 105 °C aufgeheizt, 3 h auf dieser Temperatur belassen und dann im warmen Zustand in einen elektrisch beheizten, elektronisch geregelten Kammerofen gegeben. Dort werden Sie in 55 min kontinuierlich auf 505 °C aufgeheizt, von dort innerhalb von 29 min kontinuierlich auf 820 °C gebracht, auf dieser Temperatur 1 h gehalten und anschließend in 30 min auf 520 °C abgekühlt, dort 1 h gehalten, dann mit 50 grd/h auf Raumtemperatur abgekühlt. Die Prüfung ergab, daß das kubische Bornitrid in keiner Weise oxidiert war. Eine Reaktionszone von 1 μm Dicke zur angrenzenden Glasphase wurde beobachtet. Die Körper besitzen nach dem Abkühlen eine Porosität von 26 Vol.%. Im Rahmen der Er-findung liegt es, die Schleifmittelkomponente nur einem Teilvolumen des Werkzeuges beizugeben und den übrigen Teil als Halter anzuformen.

Bei der Durchführung des erfindungsgemäßen Verfahrens kann auch mit einer Sinterpresse, d. h. mit gleichzeitiger Anwendung von Druck und Temperatur, gearbeitet werden.

Die hergestellten Feinschleifwerkzeuge wurden zum Feinstschleifen an den Lagern einer größeren Anzahl von Wellen erprobt. Diese rotierten in einer Werkzeugmaschine mit 180 Umdrehungen pro Minute. Die als Feinstschleifwerkzeuge verwendeten Körper oszillierten mit 700/min Oszillationsfrequenz. Bei einem Anpreßdruck der Feinstschleifkörper an die Lagerflächen von 1,5 bar ergab sich nach einer Bearbeitungszeit von 1,9 sec eine Rauhtiefe Ra von 0,22 µm. Ohne die bei herkömmlichen Werkzeugen zum Feinstschleifen anfallenden Stillstandszeiten zum Nachstellen der konventionellen Werkzeuge, die etwa 20 % der Maschinenzeit ausmachen, konnten mit den erfindungsgemässen Werkzeugen ohne jede Unterbrechung mehr als 1000 Lagerflächen mit obigem Rauhtiefenergebnis bearbeitet werden. – Konventionelle Werkzeuge sind demgegenüber nach etwa 430 Lagerflächen verbraucht, nachdem sie vorher im Durchschnitt drei- bis viermal nachgestellt worden ist. Die elektronenmikroskopische Prüfung der erfindungsgemäßen Werkzeuge ergab nur eine extrem geringe Interdiffusion zwischen kubischem Bornitrid und umgebender Glasphase, eine Beeinträchtigung des kubischen Bornitrids wurde nicht beobachtet und war auch im spanenden Verhalten nicht zu beobachten.

Andrejewski, Honke & Partner, Patentanwälte in Essen

Gläser als Beispiel für Verwendung einzeln oder gemeinsam in der Bindemittel-Zusammensetzung (in Masse-%)

| Glas-Nr.: | 1 | 2 | 3 | 4 | 5 | 6 | 7 | 8 | 9 | 10 | 11 | 12 | 13 | 14 |
|---|---|---|---|---|---|---|---|---|---|---|---|---|---|---|
| $SiO_2$ | 67,18 | 69,70 | 80,36 | 55,90 | 59,80 | 54,76 | 54,33 | 68,00 | 7,34 | 9,50 | 64,20 | 73,40 | 9,50 | 11,15 |
| $B_2O_3$ | 26,21 | 16,50 | 12,80 | 1,00 | 7,30 | 17,45 | 15,96 | 1,51 | 32,40 | 23,82 | 11,50 | 17,60 | 11,15 | 34,65 |
| $P_2O_5$ | – | – | – | 4,20 | – | – | – | – | 12,51 | 19,00 | – | – | 34,65 | – |
| $Al_2O_3$ | 1,00 | 4,50 | 2,50 | 24,30 | 20,20 | 8,60 | 10,39 | 1,00 | 8,50 | 14,80 | 4,50 | 1,00 | – | 12,50 |
| $Li_2$ | 1,23 | 1,00 | – | – | – | 2,32 | 2,73 | – | 1,20 | 2,60 | – | 1,00 | 12,50 | 0,20 |
| $Na_2O$ | 2,86 | 7,30 | 3,20 | 1,00 | 1,00 | 2,69 | 2,05 | 7,59 | 5,10 | 4,14 | 6,50 | 5,70 | 0,20 | 1,00 |
| $K_2O$ | 1,00 | 1,00 | 1,12 | 1,00 | 1,00 | 2,05 | 0,40 | 8,99 | 5,72 | 1,00 | 1,05 | 1,00 | 1,00 | 1,00 |
| $CaO$ | 0,52 | – | – | 7,50 | 4,20 | 2,88 | – | 6,26 | 15,52 | 15,25 | – | – | 1,00 | 14,30 |
| $MgO$ | – | – | – | 4,50 | 6,50 | – | – | 0,45 | 2,61 | 0,61 | – | – | 14,30 | 1,00 |
| $BaO$ | – | – | 0,01 | 0,60 | – | 2,31 | 8,51 | 2,12 | 1,51 | 6,21 | – | – | 0,20 | 0,20 |
| $ZrO_2$ | – | – | 0,01 | – | – | 2,16 | 2,12 | – | 0,56 | 0,45 | – | – | 3,70 | 3,70 |
| $PbO$ | – | – | – | – | – | 1,41 | 5,08 | – | 5,02 | 6,05 | – | 0,30 | 9,10 | 9,10 |
| $TiO_2$ | – | – | – | – | – | 5,42 | 0,55 | 0,32 | 2,01 | 2,05 | – | – | 6,75 | 6,75 |
| $ZnO$ | – | – | – | – | – | – | – | 3,76 | – | 0,57 | – | – | 7,05 | 1,00 |
| Sonstige Komponenten | – | – | – | – | – | – | – | – | – | – | 12,25 | – | 1,20; 1,90; 1,80; 0,90 | 1,20; 2,70; 21,10; 0,20 |

Sonstige Komponenten sind je nach Zusammensetzung bis zu 10 Masse-% zulässig.

Patentansprüche:

1. Feinschleifwerkzeug für die Bearbeitung von Werkstücken aus Metall, Glas oder Keramik, - bestehend aus

einer feinkörnigen Schleifmittelkomponente mit kubischem Bornitrid und einer keramischen Bindemittelkomponente,

wobei die Schleifmittelkomponente und die Bindemittelkomponente innig gemischt sind und der Werkzeugkörper durch Pressen und Sintern hergestellt ist, d a d u r c h  g e k e n n z e i c h n e t, daß die Bindemittel-

komponente hauptsächlich aus feinkörnigem zusammengesinterten Glas besteht und das Feinschleifwerkzeug ein Porenvolumen von zumindest 5 Vol.% aufweist.

2. Feinschleifwerkzeug nach Anspruch 1, dadurch gekennzeichnet, daß in Kombination dazu die Schleifmittelkomponente eine maximale Korngröße von kleiner als 20 µm aufweist und zu mindestens 50 Gew.% aus dem kubischen Bornitrid, im Rest aus anderen Hartstoffen, besteht.

3. Feinschleifwerkzeug nach einem der Ansprüche 1 bis 2, dadurch gekennzeichnet, daß die Schleifmittelkomponente eine Korngröße im Bereich von kleiner 20 µm bis 4 µm aufweist und die Bindemittelkomponente ausschließlich aus feinkörnigem Glas besteht.

4. Feinschleifwerkzeug nach Anspruch 3, dadurch gekennzeichnet, daß die Bindemittelkomponente im Temperaturbereich zwischen 20 und 300 °C einen linearen thermischen Ausdehnungskoeffizienten aufweist, der kleiner oder gleich dem linearen thermischen Ausdehnungskoeffizienten der Zusammensetzung der Körner der Schleifmittelkomponente ist.

5. Feinschleifwerkzeug nach den Ansprüchen 3 oder 4, dadurch gekennzeichnet, daß das feinkörnige Glas aus zwei Glassorten gemischt ist, von denen eine einen niedrigeren, die andere einen höheren Erweichungsbereich aufweist.

6. Feinschleifwerkzeug nach Anspruch 5, dadurch gekennzeichnet, daß das feinkörnige Glas mit dem niedrigeren Erweichungsbereich ein Kornverteilungsmaximum unter 20 µm, das feinkörnige Glas mit dem höheren Erweichungsbereich ein Kornverteilungsmaximum über 50 µm aufweist.

7. Feinschleifwerkzeug nach einem der Ansprüche 1 bis 6, dadurch gekennzeichnet, daß der Schleifmittelanteil einerseits und der Bindemittelanteil andererseits gewichtsmäßig etwa gleich groß sind.

8. Feinschleifwerkzeug nach einem der Ansprüche 3 bis 7, dadurch gekennzeichnet, daß durch die Kornverteilung sowie durch die Pressung und Sinterung ein Porenvolumen von 5 bis 65 Vol.%, vorzugsweise von 30 bis 50 Vol.%, eingestellt ist.

9. Feinschleifwerkzeug nach einem der Ansprüche 1 bis 8, dadurch gekennzeichnet, daß das feinkörnige Glas der Bindemittelkomponente eine Zusammensetzung im Bereich von

| | |
|---|---|
| Siliziumdioxid | 5 bis 75 |
| Boroxid | 1 bis 40 |
| Aluminiumoxid | 1 bis 25 |
| Natriumoxid | 1 bis 16 |
| Kaliumoxid | 1 bis 14, |

alle Zahlen in Gewichtsanteilen, aufweist.

10. Feinschleifwerkzeug nach Anspruch 9, dadurch gekennzeichnet, daß das feinkörnige Glas zusätzlich einen oder mehrere der Stoffe

| | |
|---|---|
| Phosphorpentoxid | maximal 35 |
| Bariumoxid | maximal 10 |
| Kalziumoxid | maximal 16 |
| Magnesiumoxid | maximal 10 |
| Lithiumoxid | maximal 3 |
| Zinkoxid | maximal 15 |
| Bleioxid | maximal 22 |
| Zirkonoxid | maximal 8 |
| Titanoxid | maximal 4, |

alle Zahlen in Gewichtsanteilen, enthält.

11. Feinschleifwerkzeug nach einem der Ansprüche 1 oder 2, dadurch gekennzeichnet, daß die Schleifmittelkomponente eine Korngröße unter 4 µm besitzt und die Bindemittelkomponente einen feinkörnigen kristallinen Zusatz, z. B. Eukryptit, von bis zu 10 Gewichtsanteilen der Bindemittelkomponente aufweist.

12. Feinschleifwerkzeug nach Anspruch 11, dadurch gekennzeichnet, daß die Bindemittelkomponente entsprechend den Ansprüchen 9 und 10 aufgebaut ist und eine Korngröße aufweist, die um einen Faktor 2 bis 4 größer ist als die der Schleifmittelkomponente.

13. Feinschleifwerkzeug nach einem der Ansprüche 11 oder 12, dadurch gekennzeichnet, daß durch die Kornverteilung sowie durch die Pressung und Sinterung ein Porenvolumen von etwa 12 Vol.% eingestellt ist.

14. Feinschleifwerkzeug nach Anspruch 13, dadurch gekennzeichnet, daß bei einem Porenvolumen von kleiner oder gleich 12 Vol.% der lineare thermische Ausdehnungskoeffizient des Bindemittels im Bereich zwischen 20 und 300 °C um zumindest $2 \times 10^{-7}$ pro Grad Celsius über dem mittleren linearen thermischen Ausdehnungskoeffizienten der Zusammensetzung der Körner des Schleifmittelanteils liegt.

15. Feinschleifwerkzeug nach Anspruch 13, dadurch gekennzeichnet, daß bei einem Porenvolumen größer oder gleich 12 Vol.% der lineare thermische Ausdehnungskoeffizient des Bindemittelanteils im Bereich zwischen 20 und 300 °C um zumindest $2 \times 10^{-7}$ pro Grad Celsius unter dem mittleren linearen thermischen Ausdehnungskoeffizienten der Zusammensetzung der Körner des Schleifmittelanteils liegt.